# EUROPEAN PATENT APPLICATION

(11) **EP 4 737 286 A1**
(43) Date of publication of application: **06.05.2026**
(21) Application number: 25213728.6
(22) Date of filing: 05.11.2025
(51) Int. Cl.: B62J 45/422

(54) **VEHICLE**

(30) Priority: 05.11.2024 IN 202411084421; 05.11.2024 IN 202411084676
(71) Applicant: Hero Motocorp Limited, New Delhi, 110 070 (IN)
(72) Inventor: DOSCH, Martin, 83661 Lenggries (DE); SEIDL, Wilhelm, 83052 Bruckmühl (DE); THEOBALD, Markus, 85764 Oberschleissheim (DE); BYRNES, Benjamin, 83101 Rohrdorf (DE)
(74) Representative: Cabinet Chaillot

(57) **Abstract**

The present invention discloses a vehicle (100). The vehicle (100) includes a lever mechanism (116). The lever mechanism (116) includes a lever (120), a support member (204), a first link (206), and a second link (208). The lever (120) is configured to operate sequentially in a first operating zone (126) and a second operating zone (128). The first link (206) is operably coupled to the lever (120) and pivotally coupled to the support member (204). The first link (206) is configured to actuate a first detecting member (228). The second link (208) is operably coupled to at least one of the lever (120) and the first link (206). The second link (208) is configured to actuate a second detecting member (238) in the second operating zone (128).

## Description

### FIELD OF INVENTION

The present invention relates to a vehicle, and more particularly to a lever mechanism of a handlebar configured to enable a rider to operate the vehicle in different operating modes and to receive haptic feedback corresponding to the selected operating mode.

### BACKGROUND

The clutch is an essential function of any vehicle. The clutch allows riders to regain control over acceleration in critical situations, such as required rapid deceleration or required sudden acceleration, ensuring a responsive and confident riding experience. It also provides the rider with an option to generate high torque and quick acceleration.

It is advantageous to mimic the clutch function in EVs for a more responsive vehicle for riders. A throttle override and regenerative braking are crucial features for any two-wheeled electric vehicle (EV) that significantly enhance safety and efficiency. The throttle override function disables vehicle movement even though there is a throttle input. Moreover, the regenerative function, where the motor acts as a generator and generates electrical energy to charge the battery. This increases the vehicle's range and reduces the need for frequent external charging.

However, in EVs, especially in adventure EVs, there is a need for a manually controlled throttle override function and regeneration function that is to be controlled by the rider and gives clear feedback to the rider about these functions.

### SUMMARY

This Summary is provided to introduce a selection of concepts in a simplified form that is further described below in the Detailed Description. This Summary is not intended to identify key or essential features of the claimed subject matter, nor is it intended to be used as an aid in determining the scope of the claimed subject matter.

In order to solve the foregoing problem and to provide other advantages, one aspect of the present invention is to provide a vehicle. The vehicle includes a body frame, a handlebar, and a lever mechanism. The handlebar is rotatably coupled to a head tube of the body frame. The handlebar has a first side portion and a second side portion. The lever mechanism includes a lever, a support member, a first link, a second link, a first detecting member, and a second detecting member. The lever is configured to operate sequentially in a first operating zone and a second operating zone. The support member is mounted to at least one of the first side portion and the second side portion. The first link is operably coupled to the lever and pivotally coupled to the support member. The first link is configured to actuate the first detecting member. The first detecting member provides a control signal corresponding to an actuation intensity of at least one of a first vehicle parameter in the first operating zone, and a second vehicle parameter in the second operating zone. The second link is operably coupled to at least one of the lever and the first link. The second link is configured to actuate the second detecting member in the second operating zone. The second detecting member provides a first output signal corresponding to activation of the first vehicle parameter, and a second output signal corresponding to activation of the second vehicle parameter.

In an aspect, the first vehicle parameter corresponds to a throttle modulation mode, and the second vehicle parameter corresponds to a regeneration mode of the vehicle.

In an aspect, the lever mechanism further includes a first adjuster screw adjustably coupled to the first link, a connecting pin operably engaged with the first adjuster screw, and a slidable pin engaged with the connecting pin. The slidable pin is configured to be slidably disposed within a slidable portion of the support member. The first detecting member is positioned at the slidable portion and provides the control signal corresponding to the slidable movement of the slidable pin.

In an aspect, the lever mechanism further includes a first resilient member disposed between the slidable pin and an inner wall of the slidable portion. The first resilient member is configured to provide a restoring bias that resists a linear displacement of the slidable pin.

In an aspect, the lever mechanism further includes a second resilient member disposed within a receiving portion of the support member. The second resilient member is configured to resist the actuation of the second link operating in the second operating zone.

In an aspect, a stiffness of the second resilient member is greater than a stiffness of the first resilient member.

In an aspect, the second detecting member is configured as a switch.

In an aspect, at least one of the first detecting member and the second detecting member is selected from a group consisting of: a Hall-effect sensor, an optical displacement sensor, a magnetic proximity sensor, and a linear variable displacement transducer (LVDT).

In an aspect, the vehicle further includes a haptic actuator and a controller. The haptic actuator is mounted on the lever mechanism. The haptic actuator is configured to generate a predefined haptic value for providing haptic feedback to a rider of the vehicle. The controller is electronically coupled to at least one of the first detecting member, the second detecting member, the third detecting member, and the haptic actuator. The controller is configured to receive one of the first output signal or the second output signal from the second detecting member. The first output signal is indicative of the operating position of the lever in the first operating zone, and the second output signal is indicative of the operating position of the lever in the second operating zone. The controller is further configured to receive a third output signal from the third detecting member. The third output signal is indicative of the operating position of the throttle. Further, the controller is configured to generate a haptic signal based on receipt of at least one of the first output signal, the second output signal, and the third output signal. Furthermore, the controller is configured to transmit the haptic signal to the haptic actuator to generate a predefined haptic feedback.

In an aspect, the controller is further configured to determine the operating position of the lever. Further, the controller is configured to configure the haptic signal such that the predefined haptic feedback has a first haptic value when the operating position of the lever is in the first operating zone. Furthermore, the controller is configured to configure the haptic signal such that the predefined haptic feedback has a second haptic value different from the first haptic value, when the operating position of the lever is in a second operating zone.

In an aspect, the first haptic value and the second haptic value are different in at least one of a predefined vibration magnitude and a predefined vibration pattern.

In an aspect, in the first operating zone, a predefined vibration magnitude of the first haptic value is proportional to the first output signal and the second output signal, thereby indicating that an acceleration command provided via the throttle is being modulated by the lever.

In an aspect, in the second operating zone, a predefined vibration magnitude of the second haptic value is proportional to the second output signal, thereby indicating that an active regeneration function overrides at least an acceleration command of the throttle.

In an aspect, the controller is further configured to determine an error condition associated with an operation of a power-generating motor of the vehicle, and configure the haptic signal such that the predefined haptic feedback has a high vibration magnitude haptic value, in response to determining the error condition.

In an aspect, the lever mechanism further includes a lower housing part and an upper housing part. The upper housing part is detachably coupled to the lower housing part. The lower housing part and the upper housing part define an enclosure therebetween to accommodate the haptic actuator.

In an aspect, the haptic actuator is selected from a group consisting of an eccentric rotating mass motor, a linear resonant actuator, and a piezoelectric actuator.

Various embodiments of the present invention offer multiple advantages and technical effects. Without limitation, the present invention provides a mechanically efficient and rider-intuitive lever mechanism configured for integration with a two-wheeled electric vehicle. The lever of the lever mechanism is operable to perform multiple vehicle control functions through a two-level actuation process, wherein each step corresponds to a distinct operational mode of the vehicle. The design allows the lever to mimic the functionality of a conventional clutch lever, thereby enhancing rider familiarity and enabling smoother transitions for riders accustomed to internal combustion engine vehicles. The distinct actuation stages of the lever correspond to a first operating zone and a second operating zone. This configuration enables the rider to sequentially activate a throttle modulation mode and a regeneration mode by simply modulating the position of the lever, eliminating the need for additional switches or controls. The two-level operation enhances ergonomic convenience, reduces rider cognitive load, and provides a seamless transition between acceleration control and energy recovery functions.

The throttle modulation mode is activated when the lever is positioned at an intermediate actuated position corresponding to the first operating zone. In this mode, the controller temporarily overrides or limits an input signal from the throttle, thereby preventing the power-generating motor from generating torque regardless of the throttle input. This allows the rider to maintain safe vehicle control under conditions such as traffic stops, low-speed balancing, or controlled deceleration. Further, when the lever is actuated beyond the intermediate actuated position to a fully actuated position, the regeneration mode is activated. In this mode, the power-generating motor operates in a reverse torque configuration to decelerate the vehicle while converting the kinetic energy of the vehicle into electrical energy, which is subsequently used to charge the battery. The regeneration mode enhances energy efficiency and extends the overall operational range of the vehicle by recovering energy during braking or downhill travel.

The lever mechanism enables the rider to control multiple vehicle functions through a single, compact assembly, reducing the need for additional switches or control units. The two-stage actuation of the lever allows quick and effortless transition between operational modes, enabling seamless switching between throttle modulation and regeneration. This design simplifies rider input and provides an intuitive control experience, particularly for users transitioning from conventional internal combustion engine vehicles. The lever mechanism also offers a mechanically robust structure that ensures consistent motion transfer and long-term reliability under repeated actuation.

A key technical advantage of the invention is the rider's ability to easily distinguish between different operating modes through tactile feedback. This is achieved by the integration of a first resilient member and a second resilient member, each configured with distinct stiffness characteristics. The first resilient member provides smooth resistance during actuation in the throttle modulation range, allowing controlled input and fine torque management. As the lever is moved further into the second operating range, the rider experiences a noticeably higher resistance due to the second resilient member, which serves as a physical cue indicating entry into the regeneration mode. This natural, mechanical feedback eliminates the need for visual indicators or separate alerts, allowing the rider to sense the current operating mode purely through lever feel. The differentiated spring response improves rider awareness, enhances control accuracy, and reduces operational distraction.

In certain embodiments, the invention further enhances rider perception through haptic feedback integrated with the lever mechanism. The haptic actuator, in coordination with the controller, provides distinguishable predefined haptic values that correspond to specific vehicle states such as throttle modulation, regenerative braking, and transition between propulsion and braking. This enables the rider to perceive operational transitions intuitively without diverting attention from the riding environment.

Through integration of a first detecting member, a second detecting member, and a third detecting member, the system dynamically interprets rider input and generates proportional output signals to the haptic actuator, reflecting the relative actuation of both the lever and the throttle. In particular, during operation in the second operating zone, the system configures the second haptic value such that its predefined vibration magnitude varies proportionally with the output signal, effectively indicating when an active regeneration function overrides an acceleration command. This nuanced feedback mechanism allows the rider to sense the powertrain state without relying solely on visual cues or display indicators.

The system further facilitates a safety-enhancing throttle modulation mechanism that prevents torque delivery when the lever is positioned in the first operating zone, regardless of throttle input. This behavior is particularly useful in stop-and-go traffic, incline hold, or emergency deceleration situations, where the rider's input through the lever is prioritized over propulsion commands. Additionally, the system is capable of communicating abnormal or constrained operational conditions, such as suppression of regenerative braking due to a fully charged energy storage device, through a dedicated high magnitude vibration pattern. This allows the rider to distinguish between active braking, throttle suppression, and system limitations, all through haptic cues alone, thereby maintaining consistent situational awareness and vehicle control across a wide range of operating scenarios.

Collectively, the integration of dual-resilient mechanical feedback and electronically controlled haptic signaling results in a highly intuitive and responsive control interface. The system allows the rider to seamlessly manage throttle modulation and regeneration through natural lever feel and vibration-based cues, eliminating the need for external indicators or manual switching. This comprehensive feedback architecture improves control accuracy, enhances safety, reduces rider fatigue, and provides a consistent and predictable user experience comparable to conventional clutch operation while offering the added benefits of energy recovery and intelligent torque management.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE FIGURES

The invention itself, together with further features and advantages, will become apparent from consideration of the following detailed description, taken in conjunction with the accompanying drawings. One or more embodiments of the present invention are now described, by way of example only wherein like reference numerals represent like elements and in which:
Figure 1A illustrates a side view of a vehicle, in accordance with at least some embodiments of the present invention;
Figure 1B illustrates a top view of the vehicle, in accordance with at least some embodiments of the present invention;
Figure 2A illustrates an assembly of a lever mechanism and a handlebar of the vehicle, in accordance with an embodiment of the present invention;
Figure 2B illustrates an exploded view of at least a portion of the assembly of the lever mechanism and the handlebar depicted in Figure 2A, in accordance with an embodiment of the present invention;
Figure 2C illustrates an exploded view of the lever mechanism depicted in Figure 2A, in accordance with an embodiment of the present invention;
Figures 2D and 2E illustrate a perspective views of the lever mechanism, in accordance with an embodiment of the present invention;
Figure 2F illustrates a top view of the lever mechanism, in accordance with an embodiment of the present invention;
Figure 2G illustrates a bottom view of the lever mechanism, in accordance with an embodiment of the present invention;
Figure 3 illustrates a system for providing haptic feedback to a rider of the vehicle, in accordance with at least some embodiments of the present invention;
Figure 4A illustrates a graphical representation of an actuation of a lever over a predetermined period, in accordance with an exemplary embodiment of the present invention;
Figure 4B illustrates a graphical representation of the actuation of the throttle over the predetermined period, in accordance with the exemplary embodiment of the present invention;
Figure 4C illustrates a graphical representation of a torque input to the motor during the predetermined period, in accordance with the exemplary embodiment of the present invention;
Figure 4D illustrates a graphical representation of a torque output from the motor during the predetermined period, in accordance with the exemplary embodiment of the present invention; and
Figure 4E illustrates a graphical representation of a haptic value of the haptic actuator during the predetermined period, in accordance with an example representation of the present invention.

The drawings referred to in this description are not to be understood as being drawn to scale except if specifically noted, and such drawings are only exemplary in nature.

### DETAILED DESCRIPTION

While the invention is susceptible to various modifications and alternative forms, a specific embodiment thereof has been shown by way of example in the drawings and will be described in detail below. It should be understood, however, that it is not intended to limit the invention to the particular forms disclosed, but on the contrary, the invention is to cover all modifications, equivalents, and alternatives falling within the spirit and the scope of the invention.

The terms "comprises", "comprising", or any other variations thereof, are intended to cover a non-exclusive inclusion, such that a setup, device, or method that comprises a list of components or steps does not include only those components or steps but may include other components or steps not expressly listed or inherent to such setup, device, or method. In other words, one or more elements in a system or apparatus preceded by "comprises... a" do not, without more constraints, preclude the existence of other elements or additional elements in the system or apparatus.

For a better understanding of this invention, a reference would now be made to the embodiment illustrated in the accompanying figures and description herein below. Further, in the following figures, the same reference numerals are used to identify the same components in various views.

While the present invention is illustrated in the context of a two-wheeled or saddle-riding type vehicle, aspects and features thereof can be used with other types of vehicles as well. It is to be noted that terms such as "vehicle", "scooter-type vehicle", "two-wheeled vehicle", "electric vehicle", and "EV" are used interchangeably throughout the description. The term "vehicle" includes vehicles such as motorcycles, scooters, bicycles, mopeds, all-terrain vehicles (ATVs), and the like.

The terms "front / forward", "rear / rearward / back / backward", "up / upper / top/upward", "down / lower / lowerward / downward", "left / leftward", "right / rightward" used therein represents the directions as seen from a vehicle rider sitting astride and these directions are referred by arrows Fr, Rr, U, Lr, L, R in the drawing figures.

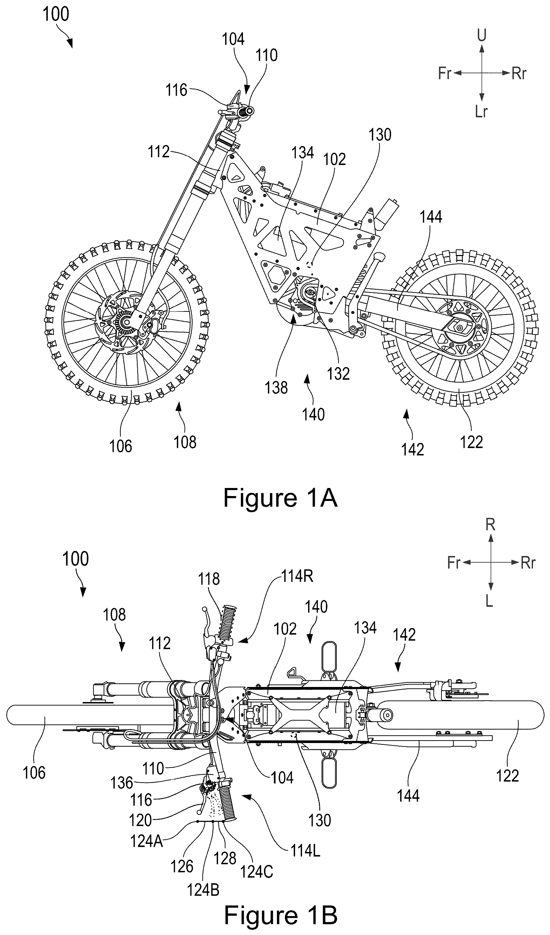

Figure 1A illustrates a side view of a vehicle (100), in accordance with at least some embodiments of the present invention. Figure 1B illustrates a top view of the vehicle (100), in accordance with at least some embodiments of the present invention. The vehicle (100) referred to herein embodies a two-wheeled electric vehicle. Hereinafter, "vehicle (100)" is alternatively referred to as "electric vehicle (100)", "two-wheeled electric vehicle (100)", or "EV (100)". Alternatively, the vehicle (100) may embody any other ridden vehicles, such as scooters, electric scooters, motorcycles, electric motorcycles, three-wheeled vehicles, all-terrain vehicles (ATVs), *etc.,* without limiting the scope of the invention.

Referring to Figures 1A and 1B, the vehicle (100) includes a body frame (102), a steering assembly (104), and at least one front ground engaging member (106). The body frame (102) supports the steering assembly (104) and the at least one front ground engaging member (106) at a front portion (108) of the vehicle (100). The steering assembly (104) includes a handlebar (110), which is rotatably coupled to a head tube (112) of the body frame (102) to enable directional control. As illustrated in Figure 1B, the handlebar (110) includes a first side portion (114L) and a second side portion (114R), positioned on opposite sides of the head tube (112), as seen from a front or top view of the vehicle (100).

The vehicle (100) further includes a lever mechanism (116) and a throttle (118). The lever mechanism (116) is mounted to at least one of the first side portion (114L) and the second side portion (114R) of the handlebar (110). In the representative example, the lever mechanism (116) is mounted to the first side portion (114L), while the throttle (118) is operably mounted to the second side portion (114R) of the handlebar (110). The lever mechanism (116) includes a lever (120), operable by the rider to switch between a first vehicle parameter and a second vehicle parameter. In a specific embodiment, the first vehicle parameter corresponds to a throttle modulation mode, and the second vehicle parameter corresponds to a regeneration mode of the vehicle (100). However, the configuration described above is merely illustrative. In alternative embodiments, the functional assignment of the lever (120) may be reversed, such that the first vehicle parameter corresponds to the regeneration mode, and the second vehicle parameter corresponds to the throttle modulation mode, depending on design requirements, vehicle type, or control logic preferences.

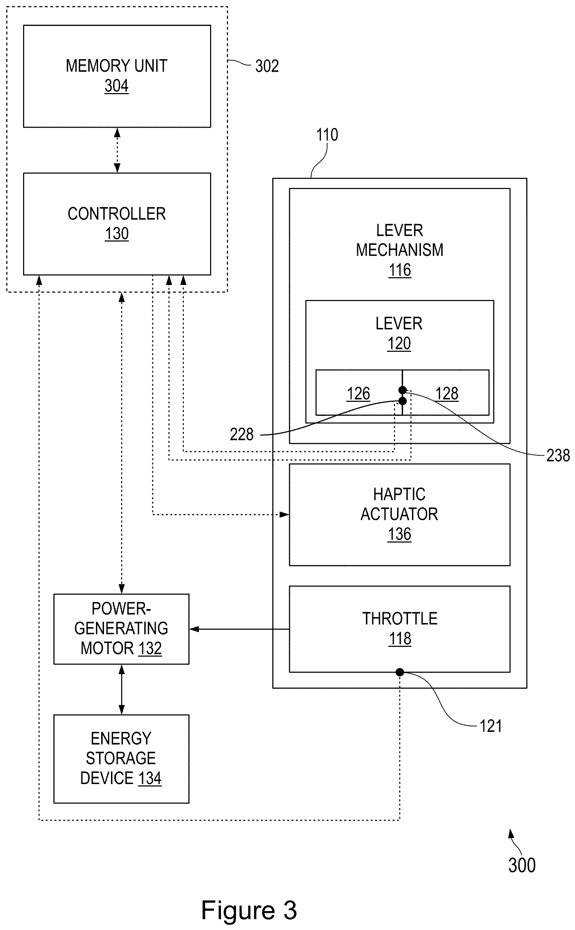

The throttle (118) functions as a primary control input for acceleration and deceleration of the vehicle (100). The throttle (118) is configured to rotate clockwise or counterclockwise relative to the second side portion (114R), as seen from a side view of the vehicle (100). The rotational movement of the throttle (118) is detected by a third detecting member ((121), see Figure 3), which may be configured as a potentiometer, Hall-effect sensor, optical encoder, or other suitable angular position sensing device capable of accurately detecting the operating position of the throttle (118).

The lever (120), as disclosed herein, is designed to mimic the operation of a clutch lever of an internal combustion engine (ICE) vehicle. In the ICE vehicle, the clutch lever disengages engine power from the drivetrain, restricting power transfer to at least one rear ground engaging member (122). Analogously, in the present electric vehicle (100), the lever (120) functions as a "two-level clutch lever." When actuated from an unactuated position (124A) to an intermediate actuated position (124B), the first vehicle parameter *(i.e.,* the throttle modulation mode) is activated. When the lever (120) is further actuated from the intermediate actuated position (124B) to a fully actuated position (124C), the second vehicle parameter *(i.e.,* regeneration mode) is activated. In other words, displacement of the lever (120) from the unactuated position (124A) to the intermediate actuated position (124B) defines a first operating zone (126), which corresponds to the throttle modulation mode. Displacement beyond the intermediate actuated position (124B) to the fully actuated position (124C) defines a second operating zone (128), which corresponds to the regeneration mode.

When the vehicle (100) operates in the throttle modulation mode, a controller (130) modulates the throttle response to provide smoother and more progressive acceleration, thereby enhancing ride comfort and stability. In the regeneration mode, the controller (130) enables a power-generating motor (132) to operate in a reverse torque condition to decelerate the vehicle (100). The kinetic energy generated during deceleration is converted into electrical energy, which is used to charge an energy storage device (134), such as a battery. The power-generating motor (132) functions as a generator during this operation.

When the energy storage device (134) is fully charged, further regeneration is disabled to prevent overcharging. This condition is managed by a battery management system (BMS) and a motor control unit (MCU). The BMS is configured to monitor the state of charge of the energy storage device (134) and to limit or cut off the charging current when the energy storage device (134) approaches a full-charge threshold. The energy storage device (134) may include, but is not limited to, a rechargeable lithium-ion battery or a lithium iron phosphate battery.

In at least one embodiment, the vehicle (100) further includes a haptic actuator (136), mounted to at least one of the first side portion (114L) and the second side portion (114R) of the handlebar (110), and in the illustrated embodiment, integrated within the lever mechanism (116). The haptic actuator (136) is configured to deliver a predefined haptic feedback, such as vibrations or pulses, to the rider based on the operational status of the vehicle (100).

The vehicle (100) further includes a power unit (138). The power unit (138) is supported on the body frame (102) in a middle portion (140) of the vehicle (100). The power unit (138) encompasses the power-generating motor (132), the energy storage device (134), and optionally a transmission system (not shown). The power-generating motor (132) is operably coupled to the throttle (118) and electrically coupled to the energy storage device (134). Additionally, the power-generating motor (132) is coupled to at least one of the front ground engaging member (106) and the rear ground engaging member (122), depending on the drive configuration. The power-generating motor (132) is controlled via signals from the controller (130), which manages torque delivery and regenerative operation. The at least one rear ground engaging member (122) is supported at a rear portion (142) of the vehicle (100). A swingarm (144) extends between the middle portion (140) and the rear portion (142) and pivotally connects the at least one rear ground engaging member (122) to the body frame (102). Additionally, the body frame (102) supports a seat member (not shown) for the rider support.

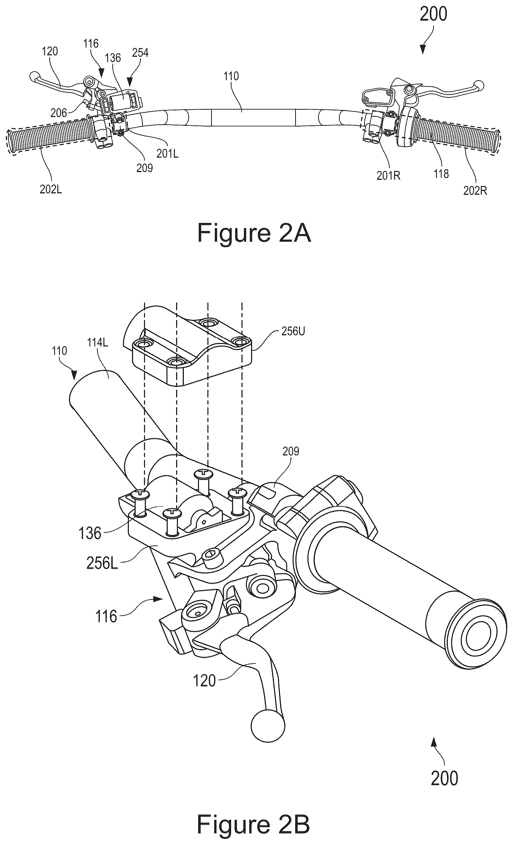

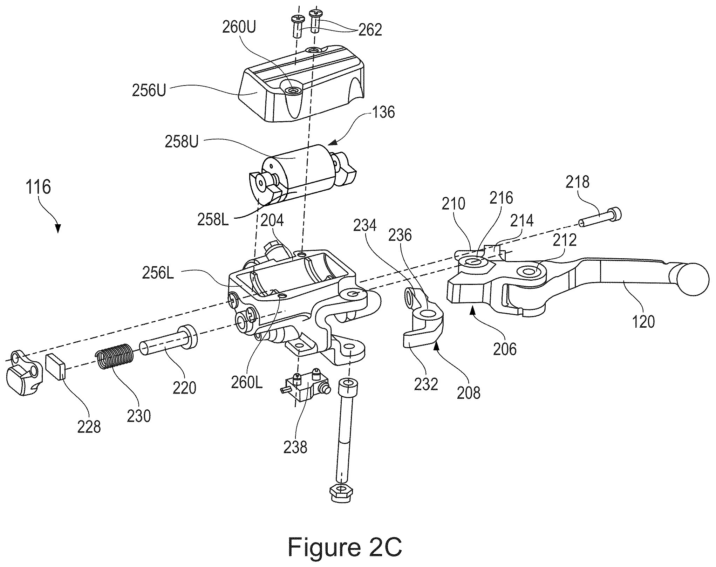

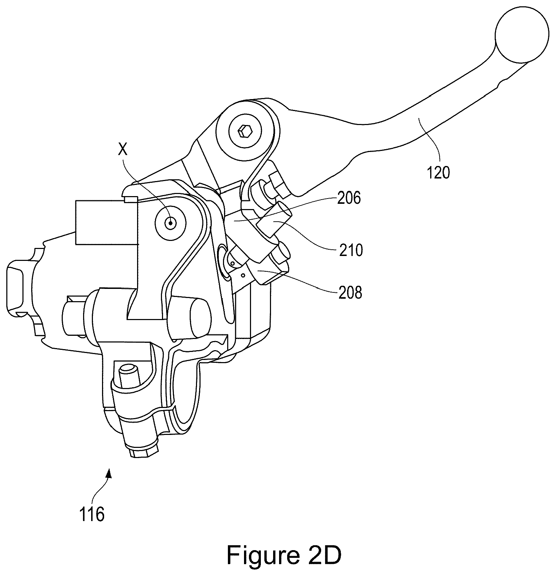

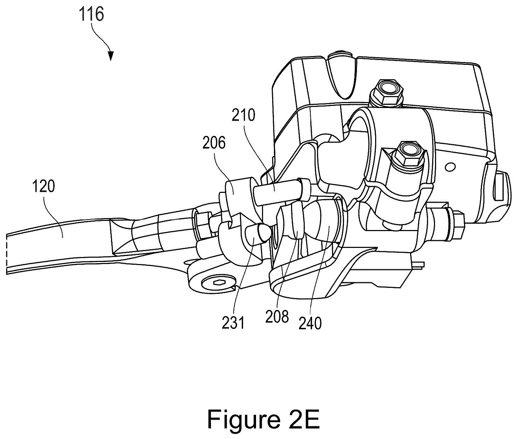

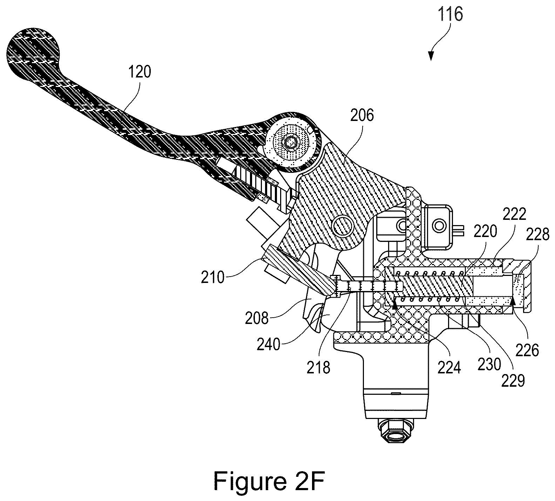

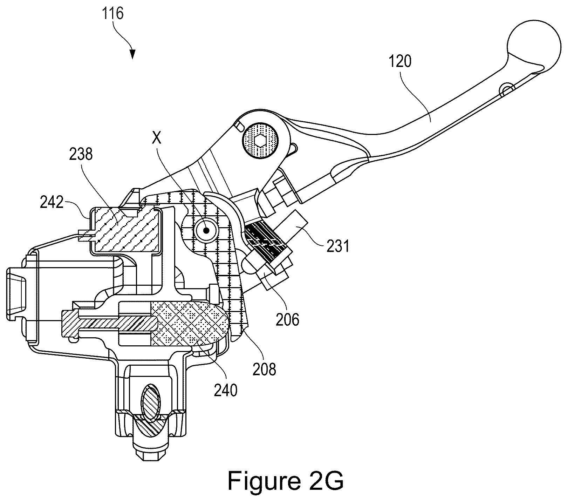

Figure 2A illustrates an assembly (200) of the lever mechanism (116) and the handlebar (110), in accordance with an embodiment of the present invention. Figure 2B illustrates an exploded view of at least a portion of the assembly (200) of the lever mechanism (116) and the handlebar (110) depicted in Figure 2A, in accordance with an embodiment of the present invention. Figure 2C illustrates an exploded view of the lever mechanism (116) depicted in Figure 2A, in accordance with an embodiment of the present invention. Figures 2D and 2E illustrate perspective views of the lever mechanism (116), in accordance with an embodiment of the present invention. Figure 2F illustrates a top view of the lever mechanism (116), in accordance with an embodiment of the present invention. Figure 2G illustrates a bottom view of the lever mechanism (116), in accordance with an embodiment of the present invention.

Referring to Figure 2A, the first side portion (114L) of the handlebar (110) encompasses a first coupling section (201L) and a first gripping section (202L). The first gripping section (202L) extends outwardly from the first coupling section (201L). The first gripping section (202L) is configured to provide a first side grip to the rider. Likewise, the second side portion (114R) encompasses a second coupling section (201R) and a second gripping section (202R). The second gripping section (202R) extends outwardly from the second coupling section (201R). The second gripping section (202R) is configured to provide a second side grip to the rider.

The lever mechanism (116) includes, *inter alia,* a support member (204), a first link (206), and a second link (208). The lever (120) is configured to be operated by the rider to sequentially actuate the first link (206) and the second link (208). The support member (204) serves as a structural frame and mounting base to which other components of the lever mechanism (116) are pivotally or operatively connected. As shown in Figure 2A, the support member (204), which provides structural support at least to the haptic actuator (136), the first link (206), and the second link (208), is mounted to at least one of the first side portion (114L) and the second side portion (114R) of the handlebar (110). In the configuration depicted in Figures 2A and 2B, the support member (204) is mounted to the first side portion (114L) of the handlebar (110). Specifically, the support member (204) is mounted to the first coupling section (201L) of the first side portion (114L) through a clamp (209). The clamp (209) provides rigid retention without necessitating modification to the existing geometrical configuration of the handlebar (110).

While the clamp (209) is utilized in the illustrated embodiment, the invention is not limited thereto. Alternative fastening means, such as mechanical brackets, adhesive-based mounts, threaded fasteners, or integrally molded fixtures, may be employed to mount the support member (204), depending on strength, vibration damping, or ergonomic design considerations. Such alternative fastening arrangements may provide additional advantages in terms of modularity, ease of the assembly (200), and adjustment flexibility.

In another configuration, the support member (204) may be mounted to the second coupling section (201R) of the second side portion (114R) of the handlebar (110). This alternative mounting configuration facilitates bilateral symmetry, redundancy, or the accommodation of additional control accessories, such as mirrors, electronic displays, or sensor modules, as required by the specific vehicle configuration. The ability to selectively mount the support member (204) on either side of the handlebar (110) enhances modularity and flexibility in system integration.

The first link (206) is operably coupled to the lever (120) and pivotally coupled to the support member (204), allowing rotational movement about a pivotal point (X) corresponding to the first operating zone (126). Similarly, the second link (208) is disposed below the first link (206) in a vertically spaced configuration. The second link (208) is operably coupled to at least one of the lever (120) and the first link (206). The second link (208) is configured to pivotally move relative to the support member (204) within the second operating zone (128). In at least one embodiment, the first link (206) and the second link (208) are both mounted at the pivotal point (X), enabling them to rotate either independently or in coordination, depending on the actuation input imparted by the lever (120).

The first link (206) is configured with three distinct portions: a first portion (212), a second portion (214) protruding from the first portion (212), and a third portion (216) positioned between the first portion (212) and the second portion (214). In an embodiment, the first portion (212) is pivotally coupled to the lever (120), forming a mechanical linkage that translates the lever (120) into rotation of the first link (206) in the first operating zone (126). The third portion (216) serves as the pivotal coupling point between the first link (206) and the support member (204), enabling the rotational movement necessary for actuation. The partial rotation of the first link (206) relative to the support member (204) corresponds precisely to the threshold actuation of the lever (120), herein defined as the first operating zone (126).

The lever mechanism (116) further includes a first adjuster screw (210) adjustably coupled to the second portion (214) of the first link (206). The first adjuster screw (210), having an adjustable configuration, is operatively engaged with a connecting pin (218), which in turn engages a slidable pin (220) disposed within a slidable portion (222) formed in the support member (204). The slidable portion (222) may be configured as a substantially cylindrical, rectangular, or arcuate cavity, depending on the desired lever travel path and spatial packaging constraints of the handlebar (110). The slidable pin (220) is dimensioned to achieve a guided tolerance with an inner wall (229) of the slidable portion (222), thereby permitting smooth linear movement while minimizing mechanical play.

The slidable pin (220) is configured to translate linearly along the longitudinal axis of the slidable portion (222) between a first end section (224) and a second end section (226) in response to the rotational displacement of the lever (120). The displacement is transmitted through the first link (206), which converts the angular motion of the lever (120) into the linear motion of the slidable pin (220). When the lever (120) is displaced from the unactuated position (124A) to the intermediate actuated position (124B), corresponding to the first operating zone (126), the slidable pin (220) moves incrementally along the slidable portion (222). The position of the slidable pin (220) at the first end section (224) corresponds to the minimum actuation intensity of the throttle modulation mode. In contrast, the position at the second end section (226) corresponds to the maximum actuation intensity within the throttle modulation mode.

A first detecting member (228) is disposed proximate to the second end section (226) of the slidable portion (222) and configured to detect the instantaneous linear position of the slidable pin (220) in each of the first operating zone (126) and the second operating zone (128). The first detecting member (228) generates a control signal corresponding to an actuation intensity of at least one of the first vehicle parameter *(i.e.,* throttle modulation mode) in the first operating zone (126), and the second vehicle parameter *(i.e.,* regeneration mode) in the second operating zone (128). In one embodiment, the first detecting member (228) is implemented as a Hall-effect sensor that outputs a variable voltage corresponding to the magnetic field variation associated with the slidable pin (220). In other embodiments, the first detecting member (228) may include an optical displacement sensor, a magnetic proximity sensor, or a linear variable displacement transducer (LVDT), selected based on desired accuracy, sensitivity, and environmental robustness.

In a specific embodiment, a first resilient member (230), such as a coil spring, helical compression spring, leaf spring, or elastomeric element, is disposed between the slidable pin (220) and an inner wall of the slidable portion (222). The first resilient member (230) is configured to provide a restoring bias that resists the linear displacement of the slidable pin (220). This biasing force must be overcome by the rider when actuating the lever (120) within each of the first operating zone (126) and the second operating zone (128).

The lever mechanism (116) further includes a second adjuster screw (231) adjustably coupled to the second link (208). The second link (208) includes a first end portion (232), a second end portion (234), and an intermediate portion (236) disposed therebetween. The intermediate portion (236) serves as the pivot interface with the support member (204), allowing the second link (208) to rotate about the pivotal point (X). A second detecting member (238) is configured to be actuated by the second link (208) in the second operating zone (128). Specifically, the first end portion (232) is configured to activate the second detecting member (238) when the lever (120) is displaced beyond the intermediate actuated position (124B) into the second operating zone (128), corresponding to the regeneration mode. The second detecting member (238) provides a first output signal corresponding to activation of the first vehicle parameter *(i.e.,* throttle modulation mode), and a second output signal corresponding to activation of the second vehicle parameter *(i.e.,* regeneration mode).

In a specific embodiment, the second detecting member (238) is configured as a switch, such as a two-way switch that transmits the first output signal or the second output signal to the controller (130). In another embodiment, the second detecting member (238) may be selected from the group consisting of a Hall-effect sensor, an optical displacement sensor, a magnetic proximity sensor, and a linear variable displacement transducer (LVDT) that transmits the first output signal or the second output signal to the controller (130). The first output signal is indicative of the operating position of the lever (120) in the first operating zone (126), and the second output signal is indicative of the operating position of the lever (120) in the second operating zone (128).

During operation in the second operating zone (128), the first detecting member (228) continues to detect the instantaneous position of the slidable pin (220), while the second detecting member (238) identifies the transition from throttle modulation mode to the regeneration mode. When the lever (120) is displaced from the intermediate actuated position (124B) to the fully actuated position (124C), the slidable pin (220) traverses the slidable portion (222) to positions corresponding to the magnitude of regenerative torque. The controller (130) determines the degree of regenerative braking torque based on the continuous position data from the first detecting member (228) while using the second detecting member (238) as a mode-selection trigger. The position of the slidable pin (220) at the first end section (224) represents the minimum regenerative braking intensity. In contrast, the position at the second end section (226) represents the maximum regenerative braking intensity.

To facilitate tactile distinction between the two operating zones, the lever mechanism (116) further includes a second resilient member (240) disposed within a receiving portion (242) of the support member (204). The second resilient member (240) may be formed from an elastomeric or rubber-like material, exhibiting a stiffness greater than that of the first resilient member (230) used in the throttle modulation zone.

Consequently, when the rider actuates the lever (120) from the intermediate actuated position (124B) toward the fully actuated position (124C), a noticeably higher resistance is encountered due to compression of the stiffer second resilient member (240). This provides distinct tactile feedback to the rider upon entry into the regeneration mode, enabling intuitive differentiation between operating zones without requiring visual confirmation or audible indication.

In an embodiment, the haptic actuator (136) is mounted on the lever mechanism (116) and is configured to be selectively coupled to the first coupling section (201L) or the second coupling section (201R) of the handlebar (110). This selective coupling allows for flexible installation based on different configurations or rider preferences of the vehicle (100).

The haptic actuator (136) is electronically coupled to the controller (130), enabling it to receive a haptic signal related to various vehicle operating parameters. Upon receiving the haptic signal, the haptic actuator (136) produces the predefined haptic feedback in the form of vibrations, which are calibrated in both magnitude and pattern to effectively communicate specific vehicle states or alerts to the rider. The predefined haptic values may include a predefined vibration magnitude and a predefined vibration pattern. Without loss of generality, the predefined haptic values may also include variable intensities, frequencies, durations, and rhythmic patterns, allowing for haptic feedback that can distinguish between different operating modes such as throttle override activation, regenerative braking, fault warnings, or mode transitions.

In the illustrated embodiment, the haptic actuator (136) is configured to be coupled to the first coupling section (201L), which corresponds to a left-side coupling portion of the handlebar (110). However, in alternative embodiments, the haptic actuator (136) may be adapted for coupling to the second coupling section (201R), which corresponds to a right-side coupling portion of the handlebar (110). In yet another embodiment, without departing from the scope of the invention, multiple haptic actuators may be provided. For example, a first haptic actuator may be coupled to the first coupling section (201L) associated with the first side portion (114L) of the handlebar (110), while a second haptic actuator may be operatively coupled to the second coupling section (201R) associated with the second side portion (114R) of the handlebar (110). Each of the haptic actuators may be independently controlled or operated in coordination to provide directional or patterned haptic feedback to the rider. The provision of haptic actuators facilitates the generation of tactile signals corresponding to various operational states, alerts, or navigational cues. Furthermore, the haptic actuators may be mechanically, magnetically, or adhesively attached to their respective coupling sections, and may be removably or permanently affixed depending on the specific design or use case. In certain embodiments, the haptic actuators may be electrically powered by a shared power source integrated within the handlebar structure or may include dedicated power sources. Control signals for actuation may be delivered via wired or wireless communication interfaces.

In an embodiment, the lever mechanism (116) further includes a casing (254). The casing (254) has a lower housing part (256L) and an upper housing part (256U). The upper housing part (256U) is detachably coupled to the lower housing part (256L). The lower housing part (256L) and the upper housing part (256U) define an enclosure therebetween to accommodate the haptic actuator (136). In a specific embodiment, the lower housing part (256L) defines a shape complementary to a shape of a lower portion (258L) of the haptic actuator (136). Similarly, the upper housing part (256U) defines a shape complementary to a shape of an upper portion (258U) of the haptic actuator (136). In an embodiment, the lower housing part (256L) is configured with engaging elements (260L). The engaging elements (260L) are adapted to be engaged with complementary engaging elements (260R) of the upper housing part (256U). The engaging elements (260L) engage with the complementary engaging elements (260R) through suitable fastening elements (262). In the depicted example, the fastening elements (262) are configured as screws. Each of the engaging elements (260L) and the complementary engaging elements (260R) features a thread profile complementary to a thread profile of the fastening elements (262) *(i.e.,* screws) to hold and tighten the upper housing part (256U) with the lower housing part (256L). It is to be noted that the fastening mechanism of the upper housing part (256U) with the lower housing part (256L) may vary in other configurations. In such configurations, the fasteners, such as, but not limited to, nuts and bolts, studs, eye bolts, and the like, can be used to engage the upper housing part (256U) with the lower housing part (256L).

The support member (204) is detachably coupled to one of the first side portion (114L) and the second side portion (114R), and adapted to support the lower housing part (256L). In a specific embodiment, the support member (204) and the lower housing part (256L) integrally form a single-piece structure. In another embodiment, the support member (204) and the lower housing part (256L) may be formed individually and then coupled together through suitable joining techniques, such as welding, adhesive bonding, etc.

By way of representative example and not limitation, the haptic actuator (136) is configured as an eccentric rotating mass actuator. In other embodiments, the haptic actuator (136) may be implemented using alternative vibration-generating technologies. For example, the haptic actuator (136) may comprise a linear resonant actuator (LRA), a piezoelectric actuator, an electroactive polymer actuator, or a voice-coil actuator. Each of these configurations is operable to generate tactile sensations perceivable by the rider, thereby providing haptic feedback corresponding to one or more operational states, control inputs, or environmental conditions of the vehicle (100). In certain embodiments, the selection of the actuator type may be based on desired response characteristics, power efficiency, spatial constraints, or the level of vibration precision required to achieve a specific haptic feedback profile.

Figure 3 illustrates a system (300) for providing the haptic feedback to the rider of the vehicle (100), in accordance with at least some embodiments of the present invention. The controller (130) may be implemented as a microprocessor, microcontroller, digital signal processor (DSP), application-specific integrated circuit (ASIC), field-programmable gate array (FPGA), or any other suitable programmable processing unit. In some embodiments, the controller (130) may form part of an Electronic Control Unit (ECU) within the Engine Management System (EMS) (302) of the vehicle (100). The controller (130) is also operably connected to a memory unit (304), which may include volatile memory, such as Static Random Access Memory (SRAM) or Dynamic Random Access Memory (DRAM), and/or non-volatile memory such as Electrically Erasable Programmable Read-Only Memory (EEPROM), flash memory, or equivalent storage media.

The system (300) is configured to enable real-time generation of the predefined haptic feedback based on the operational states of rider-actuated vehicle components, specifically the lever (120) and the throttle (118). The controller (130) is electronically coupled to, inter alia, the first detecting member (228), the second detecting member (238), a third detecting member (121), and the haptic actuator (136). The controller (130) is configured to process the control signal received from the first detecting member (23), one of the first output signal and the second output signal received from the second detecting member (238), and the third output signal received from the third detecting member (121) and to generate the haptic output for the haptic actuator (136) that corresponds to the predefined haptic feedback pattern.

In operation, the controller (130) is configured to perform a plurality of functions, including receiving one of the first output signal or the second output signal from the second detecting member (238). The first output signal is indicative of the operating position of the lever (120) in the first operating zone (126), and the second output signal is indicative of the operating position of the lever (120) in the second operating zone (128). Further, the controller (130) is configured to receive the third output signal from the third detecting member (121). The third output signal is indicative of the operating position of the throttle (118). Based on this, the controller (130) is further configured to generate the haptic signal based on receipt of at least one of the first output signal, the second output signal, and the third output signal. Correspondingly, the controller (130) transmits the haptic signal to the haptic actuator (136) to generate the predefined haptic feedback. The haptic actuator (136), upon receiving the haptic signal, generates the predefined haptic feedback to inform the rider of the current operational state of the vehicle (100) or any change in the actuation of the lever (120) and/or the throttle (118).

The controller (130) further determines the specific operating position of the lever (120) and configures the haptic signal accordingly. When the lever (120) is detected to be in the first operating zone (126), the controller (130) configures the haptic signal such that the haptic actuator (136) produces a first haptic value. Conversely, when the lever (120) is detected in the second operating zone (128), the controller (130) modifies the haptic signal such that the haptic actuator (136) generates a second haptic value, which is distinguishable from the first haptic value. This distinction may be made in at least one of a predefined vibration magnitude and a predefined vibration pattern. The vibration magnitude may include variations such as low, medium, high, or continuously variable levels, whereas the vibration pattern may include continuous vibration, pulsed vibration, ramp-up or ramp-down profiles, or intermittent vibration modes, among others.

In the first operating zone, a predefined vibration magnitude of the first haptic value is proportional to the first output signal and the second output signal, thereby indicating that an acceleration command provided via the throttle (118) is being modulated by the lever (120). Further, in the second operating zone (128), a predefined vibration magnitude of the second haptic value is proportional to the second output signal, thereby indicating that an active regeneration function overrides at least an acceleration command of the throttle (118).

This dual-stage predefined haptic feedback mechanism allows the rider to intuitively perceive changes in the functional state of the vehicle (100), such as entry into throttle modulation mode or activation of regenerative braking, without the need to visually reference a dashboard or a display screen. As a result, the system (300) enhances rider awareness, promotes safer vehicle operation, and enables seamless transitions between different riding modes. Additionally, this configuration allows for scalable feedback control, wherein the predefined haptic values may be user-customizable or dynamically modulated based on vehicle speed, load conditions, or sensor-based determinations of road or terrain characteristics.

Accordingly, the integration of the first detecting member (228), the second detecting member (238), the third detecting member (121), the controller (130), the memory unit (304), and the haptic actuator (136) enables a closed-loop haptic feedback system that provides real-time haptic feedback to the rider based on sensor-derived operating parameters. The controller (130) thus functions as a central processing and actuation unit that synchronizes rider input, system state, and haptic output, thereby offering a seamless and intelligent feedback interface between the vehicle (100) and the rider.

In some embodiments, the controller (130) is configured to dynamically adjust the vibration magnitude in proportion to one or both of the output signals. For example, in the throttle modulation mode, the haptic intensity may vary based on a combination of the lever actuation depth and the throttle angle. In regeneration mode, the haptic magnitude may reflect the extent to which the regenerative braking modulates the throttle input.

Further, the controller (130) may be configured to monitor for fault or error conditions in the power-generating motor (132), the energy storage device (134), or associated subsystems. Upon detecting such conditions, the controller (130) is configured to generate a distinct, high-magnitude, or pulsed haptic feedback pattern via the haptic actuator (136). This feedback pattern alerts the rider to anomalies in the system (300), even in scenarios where visual or auditory warnings may not be immediately perceived.

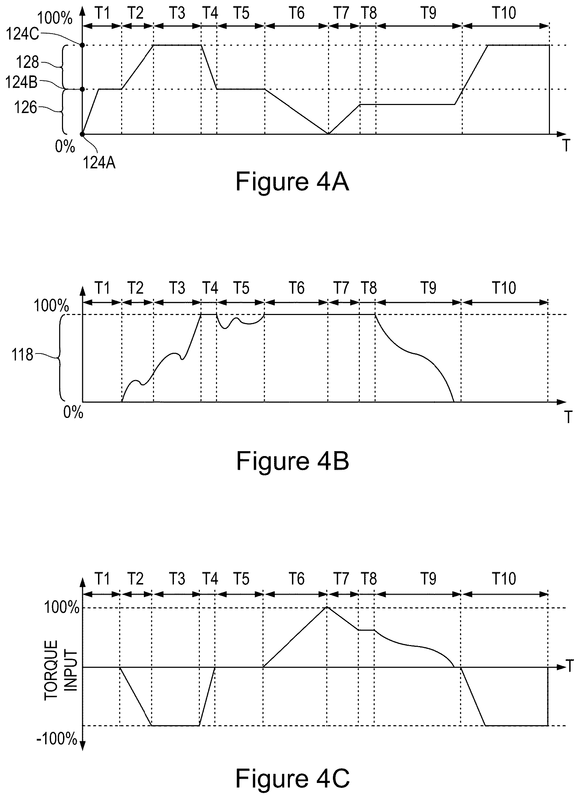

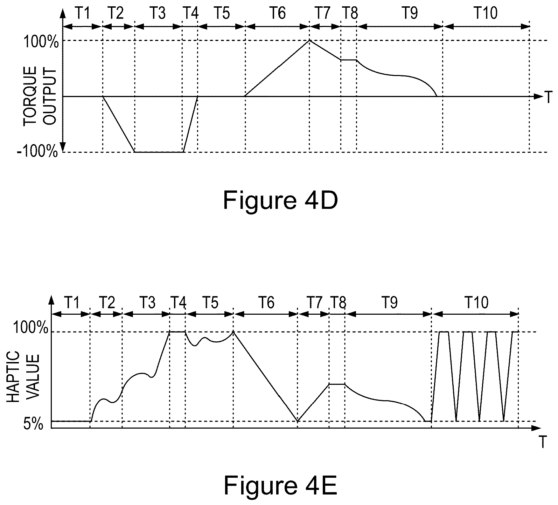

Figure 4A illustrates a graphical representation of the actuation of the lever (120) over a predetermined period (T), in accordance with an exemplary embodiment of the present invention. Figure 4B illustrates a graphical representation of the actuation of the throttle (118) over the predetermined period (T), in accordance with the exemplary embodiment of the present invention. Figure 4C illustrates a graphical representation of a torque input to the power-generating motor (132) during the predetermined period (T), in accordance with the exemplary embodiment of the present invention. Figure 4D illustrates a graphical representation of a torque output from the power-generating motor (132) during the predetermined period (T), in accordance with the exemplary embodiment of the present invention. Figure 4E illustrates a graphical representation of a haptic value of the haptic actuator (136) during the predetermined period (T), in accordance with an example representation of the present invention.

As depicted in Figures 4A to 4D, the predetermined period (T) is segmented into ten discrete regions, designated (T1) through (T10), to illustrate the dynamic interaction between the lever (120), the throttle (118), and the power-generating motor (132) over time. In a first region (T1), as illustrated in Figure 4A, the rider initiates actuation of the lever (120) and maintains it within the first operating zone (126). Specifically, the lever (120) is displaced from the unactuated position (124A) to the intermediate actuated position (124B), which defines a threshold level of actuation. During this interval, the throttle (118) remains in an unactuated position, and therefore, no throttle input is provided to the controller (130). Accordingly, the torque input to the power-generating motor (132) and the corresponding torque output remain at zero, whereby the power-generating motor (132) does not provide drive torque to the vehicle (100). The vehicle (100) may nevertheless move passively, for example, due to gravitational forces or external pushing, while the power system remains active.

At this stage, the second detecting member (238) transmits the first output signal to the controller (130), thereby confirming the position of the lever (120) within the first operating zone (126). To indicate this control state to the rider, the haptic actuator (136) generates a predefined minimum vibration feedback, typically about five percent of the maximum available vibration magnitude. This subtle yet perceptible haptic response communicates that the vehicle (100) is powered on and in a throttle modulation-ready condition, even though no propulsion torque is being delivered. In this condition, there is no throttle override, since the throttle (118) itself is inactive. Rather, the system (300) remains in a controlled static mode, wherein the power-generating motor (132) is energized but non-propulsive, awaiting further rider input.

Consequently, a continuous low-level tactile feedback provides the rider with a tactile indication of the powered state of the vehicle (100), enhancing situational awareness without requiring visual confirmation through dashboard indicators.

In a second region (T2), as illustrated in Figure 4A, the lever (120) is displaced from the intermediate actuated position (124B) to the fully actuated position (124C), resulting in a progressive increase in regenerative braking torque from zero to a maximum value. As the lever (120) continues to move into the second operating zone (128), the controller (130) interprets the second output signal from the second detecting member (238), indicative of activation of the regeneration mode and deactivation of the throttle modulation mode. In this zone, the control signal from the first detecting member (228) gives a command to gradually intensify the regeneration mode of the power-generating motor (132). During this interval, the power-generating motor (132) transitions from a motoring state to a generating state, wherein kinetic energy from the drivetrain is converted into electrical energy and routed back to the energy storage device (134), thereby enhancing energy recovery and efficiency of the vehicle (100).

In a third region (T3), the lever (120) is maintained steadily at the fully actuated position (124C), producing the maximum level of regenerative braking. The power-generating motor (132) operates exclusively in the regeneration mode, applying peak reverse torque to the drivetrain to decelerate the vehicle (100) while maximizing energy recovery. The controller (130) maintains this steady regenerative condition until the lever (120) begins its release phase. Subsequently, in a fourth region (T4), the lever (120) is gradually released from the fully actuated position (124C) back toward the intermediate actuated position (124B), causing the regeneration torque to proportionally decrease from its maximum value toward zero. At a fifth region (T5), the lever (120) is maintained steadily at the intermediate actuated position (124B), producing the minimum level of regenerative braking. During the regions (T2, T3, and T4), the throttle (118) is simultaneously actuated, moving progressively from an unactuated or zero-throttle state in the second region (T2) toward a fully actuated state in the third region (T3) and remaining at maximum actuation during the fourth and fifth regions (T4 and T5). Regardless of the throttle input, the active regeneration mode dominates the control logic, such that regenerative torque is applied to the drivetrain to decelerate the vehicle (100).

Correspondingly, as illustrated in Figures 4C and 4D, both the torque input and torque output of the power-generating motor (132) exhibit negative values indicative of energy absorption rather than delivery. The magnitude of the negative torque varies dynamically with the lever displacement. As shown in Figure 4E, the haptic actuator (136) provides predefined haptic feedback corresponding to each region. The vibration magnitude increases proportionally with the rider's throttle actuation, thereby providing an intuitive tactile indication that higher throttle input is overridden by the lever position and signaling the rider that there will be higher positive torque upon sudden release of the lever (120). This haptic feedback enables the rider to perceive regenerative braking intensity without relying on visual cues, improving safety, awareness, and overall user experience.

Further, from a sixth region (T6) to a ninth region (T9), the lever (120) operates within the first operating zone (126), corresponding to the throttle modulation mode of the system (300). In the sixth region (T6), the rider releases the lever (120) from the intermediate actuated position (124B) toward the unactuated position (124A), as illustrated in Figure 4A. This reverse motion causes the modulation applied by the controller (130) to decrease progressively from its maximum value to zero. As the lever (120) approaches the unactuated position (124A), the second detecting member (238) provides the second output signal to the controller (130), indicative of termination of the throttle modulation mode. In response, the controller (130) restores full throttle authority to the throttle (118), allowing the torque output of the power-generating motor (132) to increase from the restricted state to full propulsion torque.

During this interval, the throttle (118) may remain nearly fully actuated, as shown in Figure 4B, typically corresponding to a 100% throttle input. Since the throttle input remains constant, the reduction in lever actuation directly decreases the modulation intensity. In other words, greater lever actuation produces higher throttle modulation (reducing effective torque), while lever release reduces modulation, thereby permitting higher torque delivery for the same throttle input. Consequently, as the lever (120) is released, both the torque input and torque output of the power-generating motor (132), as shown in Figures 4C and 4D, rise progressively from 0% toward 100%, resulting in a smooth and controlled transition from a modulated or restricted torque condition to full-power propulsion.

This transitional behavior continues through the seventh (T7), eighth (T8), and ninth (T9) regions, in which the lever (120) remains within the lower range of the first operating zone (126). In these regions, the controller (130) interprets subtle lever movements or sub-threshold positions as predictive inputs and accordingly maintains or slightly moderates torque output to ensure ride stability and smooth torque blending.

Simultaneously, the haptic actuator (136) provides predefined haptic feedback patterns with the vibration magnitude proportional to the position of the lever (120) and the throttle input. As illustrated, from the regions (T6) through (T8), while the throttle input is held at approximately 100%, the vibration magnitude follows the lever actuation, indicating that the vibration magnitude is proportional to the lever position. In the ninth region (T9), the lever (120) remains constant while the throttle (118) reduces, and the vibration magnitude follows the throttle input, indicating the vibration magnitude is also proportional to the throttle input.

Accordingly, from regions (T6) through (T9), the rider perceives a continuous and intuitive correspondence among the lever actuation, the throttle modulation, and the haptic feedback. The vibration magnitude is proportional to both the lever position and the throttle input, providing tactile feedback indicative of the torque restriction imposed by the lever (120). This ensures that the transition from a torque-restricted condition to full propulsion occurs smoothly and predictably, thereby improving rider confidence, enhancing control accuracy, and contributing to the overall safety and responsiveness of the vehicle (100).

In a tenth region, designated as (T10), the lever (120) is actuated and held by the rider at the fully actuated position (124C), which corresponds to the second operating zone (128), as illustrated in Figure 4A. This position indicates the rider's clear intent to engage in regenerative braking. Concurrently, the throttle (118) is maintained at a fully released state (i.e., 0% actuation), as illustrated in Figure 4B, confirming that no forward propulsion command is being issued. This input condition, full lever actuation without any throttle engagement, represents a classical regenerative braking scenario, wherein the vehicle (100) should decelerate due to reverse torque generated by the power-generating motor (132). Upon receiving the second output signal from the second detecting member (238), and confirming a 0% throttle input from the third detecting member (121), the controller (130) initiates a regeneration command. Accordingly, as illustrated in Figure 4C, the torque input to the power-generating motor (132) begins to increase negatively, transitioning from 0% toward -100%, as the controller (130) attempts to induce reverse torque for energy recovery. However, as shown in Figure 4D, the torque output of the power-generating motor (132) remains persistently at zero, despite the power-generating motor (132) receiving a regenerative command.

This failure arises from a system-level constraint that inhibits regeneration: specifically, the energy storage device (134) is detected to be fully charged and therefore cannot accept additional incoming electrical energy. Since continued regenerative current flow under such conditions may risk overcharging, thermal stress, or damage to the battery system, the controller (130) intervenes to disregard the regeneration command. This involves actively suppressing the torque output of the power-generating motor (132), effectively disabling the regeneration function, even though all mechanical and electronic indicators suggest that regenerative braking should occur, requiring the rider to rely on the mechanical braking system to decelerate the vehicle (100).

A person skilled in the art would appreciate that the operating condition of the vehicle (100) may not be limited to the above-discussed region (T1 to T10). Without deviating from the scope of the invention, there may be other operating conditions of the vehicle (100) that are managed by the rider through the lever (120) and the throttle (118).

While a few embodiments of the present invention have been described above, it is to be understood that the invention is not limited to the above embodiments and modifications may be appropriately made thereto within the spirit and scope of the invention.

While considerable emphasis has been placed herein on the particular features of this invention, it will be appreciated that various modifications can be made and that many changes can be made in the preferred embodiments without departing from the principles of the invention. These and other modifications in the nature of the invention or the preferred embodiments will be apparent to those skilled in the art from the invention herein, whereby it is to be distinctly understood that the foregoing descriptive matter is to be interpreted merely as illustrative of the invention and not as a limitation.

## Claims

1. A vehicle (100), comprising:
a body frame (102) comprising a head tube (112);
a handlebar (110) rotatably coupled to the head tube (112), the handlebar (110) comprising a first side portion (114L) and a second side portion (114R);
a first detecting member (228) and a second detecting member (238); and
a lever mechanism (116) comprising:
a lever (120) configured to operate sequentially in a first operating zone (126) and a second operating zone (128);
a support member (204) mounted to at least one of the first side portion (114L) and the second side portion (114R);
a first link (206) operably coupled to the lever (120) and pivotally coupled to the support member (204), the first link (206) configured to actuate the first detecting member (228), wherein the first detecting member (228) provides a control signal corresponding to an actuation intensity of at least one of a first vehicle parameter in the first operating zone (126), and a second vehicle parameter in the second operating zone (128); and
a second link (208) operably coupled to at least one of the lever (120) and the first link (206), the second link (208) configured to actuate the second detecting member (238) in the second operating zone (128), wherein the second detecting member (238) provides a first output signal corresponding to activation of the first vehicle parameter, and a second output signal corresponding to activation of the second vehicle parameter.

2. The vehicle (100) as claimed in claim 1, wherein the first vehicle parameter corresponds to a throttle modulation mode, and the second vehicle parameter corresponds to a regeneration mode of the vehicle (100).

3. The vehicle (100) as claimed in claim 1, wherein the lever mechanism (116) further comprises:
a first adjuster screw (210) adjustably coupled to the first link (206);
a connecting pin (218) operably engaged with the first adjuster screw (210); and
a slidable pin (220) engaged with the connecting pin (218), the slidable pin (220) configured to be slidably disposed within a slidable portion (222) of the support member (204),
wherein the first detecting member (228) is positioned at the slidable portion (222) and provides the control signal corresponding to the slidable movement of the slidable pin (220).

4. The vehicle (100) as claimed in claim 3, wherein the lever mechanism (116) further comprises a first resilient member (230) disposed between the slidable pin (220) and an inner wall (229) of the slidable portion (222), wherein the first resilient member (230) is configured to provide a restoring bias that resists a linear displacement of the slidable pin (220).

5. The vehicle (100) as claimed in claim 1, wherein the lever mechanism (116) further comprises a second resilient member (240) disposed within a receiving portion (242) of the support member (204), wherein the second resilient member (240) is configured to resist the actuation of the second link (208) operating in the second operating zone (128).

6. The vehicle (100) as claimed in claim 5, wherein a stiffness of the second resilient member (240) is greater than a stiffness of the first resilient member (230).

7. The vehicle (100) as claimed in claim 2, wherein the second detecting member (238) is configured as a switch.

8. The vehicle (100) as claimed in claim 1, wherein at least one of the first detecting member (228) and the second detecting member (238) is selected from a group consisting of: a Hall-effect sensor, an optical displacement sensor, a magnetic proximity sensor, and a linear variable displacement transducer (LVDT).

9. The vehicle (100) as claimed in claim 1, further comprising:
a haptic actuator (136) mounted on the lever mechanism (116), wherein the haptic actuator (136) is configured to generate a predefined haptic value for providing haptic feedback to a rider of the vehicle (100); and
a controller (130) electronically coupled to at least one of the first detecting member (228), the second detecting member (238), the third detecting member (121), and the haptic actuator (136), the controller (130) configured to:
receive one of the first output signal or the second output signal from the second detecting member (238), wherein the first output signal is indicative of the operating position of the lever (120) in the first operating zone (126), and the second output signal is indicative of the operating position of the lever (120) in the second operating zone (128);
receive a third output signal from the third detecting member (121), wherein the third output signal is indicative of the operating position of a throttle (118) of the vehicle (100),
generate a haptic signal based on receipt of at least one of the first output signal, the second output signal, and the third output signal; and
transmit the haptic signal to the haptic actuator (136) to generate a predefined haptic feedback.

10. The vehicle (100) as claimed in claim 9, wherein the controller (130) is further configured to:
determine the operating position of the lever (120);
configure the haptic signal such that the predefined haptic feedback has a first haptic value, when the operating position of the lever (120) is in the first operating zone (126); and
configure the haptic signal such that the predefined haptic feedback has a second haptic value different from the first haptic value, when the operating position of the lever (120) is in the second operating zone (128).

11. The vehicle (100) as claimed in claim 10, wherein the first haptic value and the second haptic value are different in at least one of a predefined vibration magnitude and a predefined vibration pattern.

12. The vehicle (100) as claimed in claim 10, wherein, in the first operating zone, a predefined vibration magnitude of the first haptic value is proportional to the first output signal and the second output signal, thereby indicating that an acceleration command provided via the throttle (118) is being modulated by the lever (120).

13. The vehicle (100) as claimed in claim 10, wherein, in the second operating zone (128), a predefined vibration magnitude of the second haptic value is proportional to the second output signal, thereby indicating that an active regeneration function overrides at least an acceleration command of the throttle (118).

14. The vehicle (100) as claimed in claim 9, wherein the controller (130) is further configured to:
determine an error condition associated with an operation of a power-generating motor (132) of the vehicle (100); and
configure the haptic signal such that the predefined haptic feedback has a high vibration magnitude haptic value, in response to determining the error condition.

15. The vehicle (100) as claimed in claim 9, wherein the lever mechanism (116) further comprises a lower housing part (256L) and an upper housing part (256U) detachably coupled to the lower housing part (256L), the lower housing part (256L) and the upper housing part (256U) define an enclosure therebetween to accommodate the haptic actuator (136).

16. The vehicle (100) as claimed in claim 9, wherein the haptic actuator (136) is selected from a group consisting of an eccentric rotating mass motor, a linear resonant actuator, and a piezoelectric actuator.
